## Europäisches Patentamt

## European Patent Office

## Office européen des brevets

(19)

(11) Numéro de publication: **0 252 848**
**B1**

(12)
# FASCICULE DE BREVET EUROPEEN

(45) Date de publication du fascicule du brevet:
03.10.90

(21) Numéro de dépôt: 87401618.1

(22) Date de dépôt: 09.07.87

(51) Int. Cl.⁵: **C04B 14/10**, C04B 28/02
// (C04B28/02, 14:10, 14:42,
18:14, 24:26)

(54) Produit à base de ciment armé de fibres de verre.

(30) Priorité: 10.07.86 FR 8610117

(43) Date de publication de la demande:
13.01.88 Bulletin 88/2

(45) Mention de la délivrance du brevet:
03.10.90 Bulletin 90/40

(84) Etats contractants désignés:
AT BE CH DE ES FR GB IT LI LU NL SE

(56) Documents cités:
DE-A- 2 309 943
FR-A- 1 211 265
FR-A- 2 149 998
GB-A- 1 113 205
GB-A- 1 588 938
GB-A- 2 148 871

CHEMICAL ABSTRACTS,
vol. 102, no. 20, mai 1985, page 309, abstract
no. 171585y, Columbus, Ohio, US; R. SARKER et al.:
"Role of calcined china clay on the hydraulicity of high
magnesian portland cements", & INDIAN
CERAM. 1984, 27(4), 79-84

(73) Titulaire: VETROTEX SAINT-GOBAIN, 767 quai des
Allobroges, F-73000 Chambéry(FR)

(72) Inventeur: Sohm, Jean-Michel, 6, rue
Cyfflé-Appartement 191, F-54000 Nancy(FR)

(74) Mandataire: Breton, Jean-Claude et al, SAINT-GOBAIN
RECHERCHE 39, quai Lucien Lefranc,
F-93300 Aubervilliers Cedex(FR)

## Description

La présente invention concerne des produits à base de ciment du type contenant des fibres de verre résistant aux alcalins. Elle trouve une application particulièrement importante, bien que non exclusive, dans le domaine des mortiers et bétons qui sont utilisés dans le bâtiment pour la fabrication de plaques ou panneaux devant bien résister au vieillissement (revêtement de façade par exemple).

On connait déjà le renforcement des liants minéraux du type ciments et bétons par des fibres de verre résistant aux alcalins. Mais lors de l'utilisation de telles fibres de verre, il se pose un problème de résistance et de durabilité du composition liant-fibre. On assiste en effet à une mauvaise évolution du composite au cours du temps se traduisant par une baisse des contraintes à la rupture ou modules de rupture et une chute brutale dans le temps des allongements et énergies de rupture.

Les mécanismes de dégradation sont chimiques par attaque de la fibre par la solution interstitielle alcaline du ciment, et physiques par modification de l'interface ciment-fibre, en particulier par la croissance de cristaux de $Ca(OH)_2$ et de silicates hydratés. C'est ce dernier phénomène qui domine dans le cas des verres résistant aux alcalins. A cause des problèmes de durabilité, l'utilisation de ciment armé de fibres de verre du type ci-dessus défini est cantonnée à des applications limitées non structurelle, et en prenant des précautions importantes lors de la pose des produits à base de tels ciments (fixation souple, possibilité de reprendre les variations dimensionnelles...).

Pour tenter de remédier à ces problèmes on a recherché des compositions de verre plus performantes, et on a essayé de limiter la présence de $Ca(OH)_2$ qui se trouve être l'ennemi principal de la fibre de verre.

On connait, en particulier, le document FR 2 149 998 qui décrit un produit contenant du ciment et des fibres de verre résistant aux alcalins de caractéristiques définies pouvant atteindre un module de rupture de 24,5 MPa après un mois sous eau chaude à 60°C. Pour ce faire, une certaine quantité de "pouzzolane" est rajoutée à la matrice de ciment dans des proportions déterminées, le terme pouzzolane étant à entendre d'après le document FR 2 149 998, comme s'utilisant pour des matières artificielles aussi bien que naturelles qui sont des silicates vitreux susceptibles de réagir avec la chaux.

Cette solution présente des inconvénients :
- d'une part, elle ne précise aucune composition des "pouzzolanes" à utiliser (teneur en $SiO_2$ ; $Na_2O$ ; $K_2O$...).
Or, l'expérience du demandeur et la littérature montrent que toutes les "pouzzolanes" ne conduisent pas à une amélioration de la résistance des ciments armés en verre alcali résistant.
- d'autre part, elle fait état de cas où les modules de rupture et les résistances aux chocs diminuent malgré tout sensiblement au cours du temps.

Par exemple le module de rupture dans le cas d'un mortier constitué de ciment Portland ordinaire et de 25 % de pouzzolane du type cendres volantes passe de 29,46 MPa à 7 jours, à 16,77 MPa à 30 jours, dont 23 jours sous eau à 60°C.

L'invention vise à fournir un produit à base de ciment armé de fibres de verre répondant mieux que ceux antérieurement connus aux exigences de la pratique, notamment en ce qu'il permet :
- d'obtenir de meilleurs résultats de résistance à la rupture immédiate et à terme,
- de maintenir les modules de rupture et les résistances aux chocs à des valeurs sensiblement égales, variant peu au cours du vieillissement des produits dans le temps, c'est-à-dire pouvant ne présenter aucune évolution des caractéristiques mécaniques au cours du temps selon le test classique sous eau à 50°C pendant 3 mois,
- de baisser le pourcentage de fibres de verre dans le composite pour une résistance recherchée donnée, (les résultats obtenus avec la présente invention étant meilleurs, toute chose étant égale par ailleurs).

Pour celà, l'invention part de la constatation faite par l'inventeur que les produits à base de ciment armé de fibres de verre alcali-résistant deviennent pratiquement insensibles au vieillissement lorsqu'il est ajouté de 30 à 40 parties en poids de métakaolin pour 100 parties de ciment. Il a été également observé que les caractéristiques du produit à base de ciment s'améliorent nettement dès que l'addition de métakaolin dépasse 10 parties en poids de ciment. Par métakaolin ou métakaolinite, il faut entendre le produit activé de la kaolinite, thermiquement ou par tout autre moyen. La formule abrégée du métakaolin peut s'écrire, en utilisant les symboles classiques employés par les cimentiers, $AS_2$ ($A = Al_2O_3$ et $S = SiO_2$). Il s'obtient, par exemple, par traitement thermique de la kaolinite à des températures variant entre 700 et 900°C pendant des durées de quelques heures.

En plus des excellentes résistances obtenues, l'utilisation de métakaolin permet :
- d'éviter l'inconvénient des pouzzolanes ultrafines dont les grains peuvent pénétrer entre les fibres de verre et favoriser leur blocage, cause de fragilisation,
- de préparer un mélange homogène au niveau de la fabrication qui peut être ensuite utilisé comme un ciment classique,
- d'éviter les problèmes classiques d'approvisionnement en quantité et qualité rencontrés avec les sous-produits industriels comme certaines pouzzolanes dont les fumées de silice et les cendres volantes,
- enfin, de rendre possible une utilisation et une mise en oeuvre du produit sans modification particulière des équipements actuels. Une unité de production de GRC (Glass Reinforced Concrete) peut par exemple se mettre à produire un produit avec du métakaolin sans pratiquement d'adaptation particulière.

Dans ce but l'invention propose, notamment, un produit à base de ciment du type ci-dessus défini, caractérisé en ce que sa matrice comprend d'environ 10 parties à environ 40 parties de métakaolin en poids pour 100 parties en poids de ciment, le métakaolin présentant une réactivité à l'essai "Chapelle" modifiée supérieure à 500 mg CaO par gramme de métakaolin.

Dans un mode de réalisation avantageux de l'invention, le produit comprend en pourcentage entre 15 et 35 parties en poids de métakaolin en addition de 100 parties en poids de ciment, par exemple 30 parties et préférablement entre 20 et 30 parties, par exemple 22,5 parties.

Dans un mode également avantageux d'application de l'invention, le verre alcali-résistant comprend un pourcentage en poids de $ZrO_2$ compris entre 14 % et 20 %, par exemple 16 %.

L'invention propose également un produit à base de ciment armé de fibres de verre alcali-résistant renfermant du métakaolin, caractérisé en ce que le métakaolin, en pourcentage en poids comprend :

| | |
|---|---|
| $SiO_2$ | 50 % à 60 % |
| $Al_2O_3$ | 38 % à 46 % |
| CaO | < 1 % par exemple <0,3 % |
| $Na_2O$ | < 1 % par exemple de 0,03 % à 0,06 % |
| $K_2O$ | < 1 % par exemple de 0,25 % à 0,65 % |
| $Fe_2O_3$ | 1 % à 2 % |
| MgO | 0,1 % à 0,2 % |

la somme des différents pourcentages étant inférieure à 100 %. L'invention propose également avantageusement un produit avec du métakaolin comprenant, en pourcentage en poids, plus particulièrement :

| | |
|---|---|
| $SiO_2$ | 56 % à 59 % |
| $Al_2O_3$ | 38 % à 41 % |
| CaO | < 0,1 % |
| $Fe_2O_3$ | 1,6 % à 2 % |

Cette composition ne concerne que le métakaolin pris isolément, donc la partie active, à l'exclusion de tous les autres minéraux (silice, microcline, lignite, oxyde de fer, ...) habituellement rencontrés en présence de kaolinite.

Dans une autre application de l'invention, on réalise un produit comprenant du métakaolin et de la fumée de silice dans des proportions pour 100 parties en poids de ciment :

- métakaolin : environ 10 parties à environ 30 parties en poids,
- fumée de silice : environ 5 parties à environ 15 parties en poids,

et plus particulièrement :

- métakaolin : environ 15 parties,
- fumée de silice : environ 10 parties.

La fumée de silice est constituée de particules de silice de diamètre moyen de l'ordre de 0,1 µ et de surface spécifique de l'ordre de 20 m,²/g.

Une autre réalisation également avantageuse du produit selon l'invention consiste à rajouter entre 4 % et 10 %, par exemple de l'ordre de 5 %, de polymère afin de favoriser le mûrissement. Ce polymère peut, par exemple, être du type latex acrylique ou styrène butadiène.

L'invention sera mieux comprise à la lecture des tableaux donnés ci-après et des explications qui suivent.

Le tableau I montre la composition de différents mortiers soumis à des tests de vieillissement par le demandeur ; certains des mortiers sont réalisés selon l'invention et d'autres ont des compositions connues de l'art antérieur de façon à permettre des comparaisons sur les résultats obtenus avec les premiers. Les mortiers sont numérotés de 1 à 16 et les chiffres apparaissant dans les colonnes sont des quantités relatives en unités de poids. Par exemple, pour 100 kg ou parties de ciment CPA55, 50 kg ou parties de Sable fin, etc... Seule la quantité de fibres de verre est exprimée en pourcentage en poids de mortier humide. Ces dernières peuvent être, soit incorporées au ciment par projection, soit être mises préalablement dans la matrice.

Trois types de métakaolins ont été utilisés lors de ces essais et leur composition, exprimée en pourcentages pondéraux, est donnée dans le tableau II où ils portent les numéros 1, 2 et 4. Mais des métakaolins dont les teneurs sont comprises dans les fourchettes évoquées plus haut donnent également des résultats satisfaisants, par exemple le métakaolin n° 3 dont la composition est également précisée dans le tableau II.

La base en ciment est constituée d'un ciment Portland classique CPA. Lors des essais, un CPA55 a été utilisé. La composition du ciment est fournie dans le tableau III. Elle est exprimée en donnant des fourchettes en pourcentage de poids total, la somme des différents pourcentages devant être inférieure à 100 %.

Tous types de ciment utilisés pour les ciments renforcés à la fibre de verre (GRC) sont possibles.

Les compositions des verres utilisés, dans les essais du tableau V, sont précisées dans le tableau IV. De façon générale, un verre alcali-résistant ayant plus de 12 % (en poids) de $ZrO_2$, et même avantageusement plus de 15 %, par exemple entre 15,5 et 16,5 % convient parfaitement.

Enfin, le tableau V donne les modules de rupture mesurés en MPa (test en flexion ainsi que certains allongements à la rupture (en pourcentage de la longueur initiale) après différentes périodes de vieillissement sous eau à 50°C pour les mortiers envisagés dans le tableau I.

Les abréviations utilisées sont MOR pour le module de rupture et ε pour l'allongement à la rupture. La première période de vieillissement de 28 jours est effectuée à 20°C et 50 % d'humidité relative et non pas sous eau à 50°C à la différence des périodes suivantes.

Notons que le test de vieillissement accéléré sous eau à 50°C correspond à un facteur accélérateur de vieillissement de l'ordre de 100.

Les valeurs de module sont données à environ ± 2 MPa pour les valeurs les plus faibles et environ ± 3MPa pour les valeurs les plus élevées. Les valeurs de ε sont données à ± 0,1 % ou ± 0,2 % pour les valeurs de l'ordre de 1 % et environ ± 0,05 % pour les valeurs inférieures à environ 0,3 %.

L'examen des tableaux I et V montre que :
- un mortier contenant des fibres de verre alcali-résistantes et 30 parties en poids de métakaolin no 2 de composition définie par le tableau II pour 100 parties de ciment, a ses caractéristiques de résistance à la rupture pratiquement inchangées au cours du temps (mortier no 3) ;
- un mortier identique au précédent mais contenant cette fois ci 30 parties en poids de métakaolin no 1 pour 100 parties de ciment (mortier no 6), dont la composition est définie par le tableau II, voit ses caractéristiques de résistance à la rupture décroitre régulièrement au cours du temps ;
- de la même manière, la comparaison des mortiers nos 10, 11 et 13 montre bien l'influence du type de métakaolin utilisé sur les caractéristiques mécaniques.

D'autre part, l'influence de la quantité de métakaolin ajouté est manifeste si l'on compare les compositions nos 2, 3, 10 et 15, où il apparait que 15 parties en poids de métakaolin pour 100 parties en poids de ciment ne conduisent pas à des caractéristiques mécaniques totalement satisfaisantes. L'examen des compositions 3 et 10 montre une bonne stabilité des caractéristiques mécaniques dans le temps, correspondant à la teneur optimale en métakaolin ; la composition no 15 montre un effondrement des caractéristiques lors d'un ajout excessif de métakaolin.

L'influence de la combinaison métakaolin + fumée de silice est mise en évidence par la comparaison des compositions nos 2, 7 et 9, d'où il ressort que la fumée de silice a un rôle positif, sans toutefois pouvoir remplacer le métakaolin. Cette combinaison a pour conséquence l'obtention d'un matériau très résistant et à durabilité exceptionnelle.

En comparant toujours le mortier no 2 avec le mortier no 1 (avec ajout de cendres volantes) ou le mortier no 12, qui est le mortier de référence contenant du verre alcali-résistant sans aucun ajout, on remarque qu'avec un ajout de 15 parties en poids de métakaolin no 2 pour 100 parties de ciment (mortier no 2), le vieillissement est très nettement retardé ; la baisse du module de rupture ne dépasse guère 10 % après 28 jours + 56 jours d'eau à 50°C, à comparer avec la baisse de l'ordre de 40 % enregistrée avec les mortiers no 1 ou no 12 ;
- les résultats obtenus avec des ciments armés en fibres de verre de type E sont nettement moins bons que ceux obtenus avec des fibres de verre de type alcali-résistant (voir les essais effectués sur les mortiers no 4 et no 5) ;
- l'essai effectué avec seulement 4 % de fibres de verre (mortier no 8) et un ajout de 30 parties de métakaolin pour 100 parties de ciment, montre des modules de rupture évoluant peu au cours du temps, avec de bonnes valeurs initiales à 28 jours.

Toute chose étant égale par ailleurs, pour une résistance recherchée donnée, une quantité de fibres de verre plus faible que celle utilisée dans l'art antérieur peut être utilisée. Des valeurs comprises entre 2,5 % et 8 %. par exemple 3 %, permettent encore d'obtenir des résistances et des modules de rupture très acceptables.

La mise en oeuvre des produits selon l'invention se fait de façon identique au GRC classique. Un ciment spécial, dans lequel serait ajouté le métakaolin et qui serait utilisé comme un ciment ordinaire, est tout à fait envisageable.

Il est néanmoins nécessaire, pour des problèmes de fluidité et de mise en oeuvre (baisse du rapport eau/ciment), d'utiliser un super fluidifiant qui peut être du type naphtalène-sulfonate, comme le montre la comparaison des essais 16 et 3 (tableau I).

Les exemples précédents concernent des compositions comprenant 50 parties de sable pour 100 parties de ciment, à l'exception de la composition 14 qui montre cependant qu'un rapport différent, tel que 150 parties de sable pour 100 parties de ciment, conduit également à des résultats satisfaisants.

L'ajout de polymère du type latex acrylique ou styrène-butadiène permet d'obtenir des résultats également intéressants.

Par exemple pour un mortier comprenant :

- CPA : 100 parties en poids
- Sable fin : 50
- Eau : 40
- Métakaolin : 15
- Fluidifiant : 1
- Polymère (latex acrylique) : 5
- Taux de fibres : 6 % en poids par rapport au mortier,

des modules de rupture de 30 MPa à 28 jours et 24 MPa après 28 jours supplémentaires sous eau chaude à 50°C ont été atteints.

De façon générale, pour chaque ciment utilisé, il faut rechercher une consommation de la chaux par le métakaolin aussi complète que possible. Une appréciation de l'activité pouzzolanique de chaque ajout permet donc, en fonction de la chaux $Ca(OH)_2$ à fixer, de doser plus précisément la quantité qu'il faut ajouter. Cette détermination est évaluée selon l'essai CHAPELLE modifié, tel que décrit par R. LARGENT dans le Bulletin de Liaison des Laboratoires des Ponts et Chaussées, n° 93, Janvier-Février 1978, pages 63 et 64, qui consiste à évaluer la quantité de CaO, exprimée en mg, potentiellement consommable par 1 g de pouzzolane. A cet effet, on place en contact pendant seize heures, au voisinage de l'ébullition, la matière pouzzolanique et la chaux en suspension dan l'eau. Après refroidissement, on dose la chaux qui n'a pas réagi.

Le tableau II précise les réactivités CHAPELLE des différents métakaolins testés. La plus grande réactivité des métakaolins n°s 2 et 4 par rapport au métakaolin n° 1 explique les différences constatées précédemment au table V. Il est probable que les proportions optimales sont à pondérer en fonction de la réactivité CHAPELLE de chacun des métakaolins : plus la réactivité sera élevée, moins la quantité nécessaire sera importante. Par exemple, on constate que 22,5 % de métakaolin n° 2 conduisent à des caractéristiques très supérieures à celles obtenues avec 30 % de métakaolin n° 1, qui est moins réactif.

Il est à noter que la réactivité importante du métakaolin permet d'atteindre rapidement des limites de proportionalité convenables (telles que définies dans la norme BS 6432 de 1984).

Ceci entraine des gains en productivité importants (au démoulage par exemple) et permet de réduire les dimensions et les quantités à mettre en oeuvre des produits qui sont fabriqués à l'aide d'un ciment selon l'invention.

Des pouzzolanes classiques, du type cendres volantes, sont beaucoup plus lentes à réagir ce qui est nuisible aux propriétés à court terme et, en particulier, à la limite de proportionalité qui sert en effet de base au dimensionnement des produits à base de ciment.

De plus, un tel produit exempt de chaux évite les problèmes esthétiques liés à l'apparition d'efflorescences. Par ailleurs, il est possible d'utiliser des métakaolins blancs en combinaison avec du ciment blanc, de sorte que l'on réalise des produits blancs, contrairement à la plupart des autres pouzzolanes qui teintent le mortier.

## TABLEAU I

| Mortiers N° | 1 | 2 | 3 | 4 | 5 | 6 | 7 | 8 |
|---|---|---|---|---|---|---|---|---|
| CPA55 | 100 | 100 | 100 | 100 | 100 | 100 | 100 | 100 |
| Sable fin | 50 | 50 | 50 | 50 | 50 | 50 | 50 | 50 |
| Eau | 40 | 42 | 47 | 47 | 47 | 47 | 40 | 47 |
| Verre alcali résistant | 6 % | 6 % | 6 % | – | – | 6 % | 6 % | 4 % |
| Verre E | – | – | – | 6 % | 6 % | – | – | – |
| Cendres volantes (résidu combustion charbon) | 10 | – | – | – | – | – | – | – |
| Fumée de silice | – | – | – | – | – | – | 10 | – |
| MK 1 | – | – | – | – | 30 | 30 | 15 | 30 |
| MK 2 | – | 15 | 30 | 30 | – | – | – | – |
| MK 4 | – | – | – | – | – | – | – | – |
| Fluidifiant | 1 | 1,5 | 2,5 | 2,5 | 2,5 | 2,5 | 2,5 | 2,5 |

### TABLEAU I (SUITE)

| Mortiers N° | 9 | 10 | 11 | 12 | 13 | 14 | 15 | 16 |
|---|---|---|---|---|---|---|---|---|
| CPA55 | 100 | 100 | 100 | 100 | 100 | 100 | 100 | 100 |
| Sable fin | 50 | 50 | 50 | 50 | 50 | 150 | 50 | 50 |
| Eau | 39,2 | 45 | 45 | 45 | 46,5 | 54 | 100 | 77 |
| Verre alcali résistant | – | 6 % | 6 % | 6 % | 6 % | 6 % | 6 % | 6 % |
| Verre E | – | – | – | – | – | – | – | – |
| Cendres volantes (résidu combustion charbon) | – | – | – | – | – | – | – | – |
| Fumée de silice | 17 | – | – | – | – | – | – | – |
| MK 1 | – | – | 22,5 | – | – | – | – | – |
| MK 2 | – | 22,5 | – | – | – | 22,5 | 100 | 30 |
| MK 4 | – | – | – | – | 22,5 | – | – | – |
| Fluidifiant | 3,4 | 1,5 | 1,5 | – | 2 | 1,5 | 1 | 0 |

## TABLEAU II

|  | Métakaolin n° 1 | Métakaolin n° 2 | Métakaolin n° 3 | Métakaolin n° 4 |
|---|---|---|---|---|
| $SiO_2$ | 53,52 | 57,60 | 51,64 | 54,93 |
| $Al_2O_3$ | 42,95 | 39,1 | 44,50 | 40,7 |
| CaO | 0,19 | < 0,1 | < 0,1 | < 0,1 |
| $Fe_2O_3$ | 1,46 | 1,84 | 1,35 | 0,64 |
| $SO_3$ | 0,043 | - | - | 0,33 |
| MgO | 0,175 | 0,145 | 0,13 | 0,27 |
| $K_2O$ | 0,54 | 0,335 | 0,64 | 1,97 |
| $Na_2O$ | 0,04 | 0,032 | 0,055 | 0,056 |
| Réactivité essai Chapelle modifié en mg CaO/g | 592 | 750 | 750 | 837 |

## TABLEAU III

|  | CaO | $SiO_2$ | $Al_2O_3$ | $Fe_2O_3$ | $SO_3$ | MgO | Alcalis |
|---|---|---|---|---|---|---|---|
| CPA | 60-77 | 17-25 | 3-8 | 0,5-6,0 | 1-3 | 0,1-4 | 0,2-1,3 |

## TABLEAU IV

| Composition | Verre alcali-résistant | Verre E |
|---|---|---|
| $SiO_2$ | 70,27 | 54,50 |
| $Fe_2O_3$ | 0,05 | 0,27 |
| $TiO_2$ | 0,07 | 0,51 |
| $Al_2O_3$ | 0,24 | 14,22 |
| $ZrO_2$ | 16,05 | - |
| CaO | 0,04 | 17,32 |
| MgO | 0,04 | 4,71 |
| $Mn_2O_3$ | - | 0,01 |
| $Na_2O$ | 11,84 | 0,32 |
| $K_2O$ | 0,04 | 0,16 |
| $Li_2O$ | 1,04 | - |
| $SO_3$ | 0,02 | - |
| $B_2O_3$ | - | 7,94 |
| $As_2O_3$ | 0,04 | - |
| PbO | 0,03 | - |
| Total | 99,77 | 99,96 |

## TABLEAU V

| : Mortiers | : 1 | : 2 | : 3 | : 4 | : 5 | : 6 | : 7 | : 8 | : |
|---|---|---|---|---|---|---|---|---|---|
| : Résistance | : | : | : | : | : | : | : | : | : |
| : 28 j | : | : | : | : | : | : | : | : | : |
| : MOR (MPa) | : 31,2 | : 26,9 | : 32,7 | : 27,3 | : 34,0 | : 29,8 | : 38,2 | : 25,9 | : |
| : $\varepsilon$ (%) | : − | : 1,1 | : 1,3 | : 0,9 | : − | : 1,3 | : 1,2 | : − | : |
| : 28 j + 28 j | : | : | : | : | : | : | : | : | : |
| : eau à 50°C | : | : | : | : | : | : | : | : | : |
| : MOR (MPa) | : 19,9 | : 24,8 | : 34,1 | : 15,3 | : 16,1 | : 25,2 | : 35,9 | : 24,5 | : |
| : $\varepsilon$ (%) | : − | : 0,9 | : 1,1 | : 0,2 | : − | : 1 | : 0,9 | : − | : |
| : 28 j + 56 j | : | : | : | : | : | : | : | : | : |
| : eau à 50°C | : | : | : | : | : | : | : | : | : |
| : MOR (MPa) | : 18,8 | : 23,8 | : 32,8 | : 13,4 | : 13,9 | : 26,4 | : 34,9 | : 23 | : |
| : $\varepsilon$ (%) | : − | : 0,8 | : 1 | : 0,1 | : | : 1 | : − | : − | : |
| : 28 j + 84 j | : | : | : | : | : | : | : | : | : |
| : eau à 50°C | : | : | : | : | : | : | : | : | : |
| : MOR (MPa) | : 14,9 | : 22,9 | : 32,6 | : 11,4 | : 12,2 | : 22,9 | : 33,1 | : 20,4 | : |
| : $\varepsilon$ (%) | : − | : 0,6 | : 1 | : 0,05 | : − | : − | : − | : − | : |

## TABLEAU V (SUITE)

| : Mortiers | : 9 | : 10 | : 11 | : 12 | : 13 | : 14 | : 15 | : 16 | : |
|---|---|---|---|---|---|---|---|---|---|
| : Résistance | : | : | : | : | : | : | : | : | : |
| : 28 j | : | : | : | : | : | : | : | : | : |
| : MOR (MPa) | : 34,4 | : 31,6 | : 31,5 | : 34,4 | : 34,0 | : 34,7 | : 13,3 | : 18,1 | : |
| : $\varepsilon$ (%) | : 1,3 | : 1,1 | : − | : − | : 1,3 | : 1,24 | : − | : − | : |
| : 28 j + 28 j | : | : | : | : | : | : | : | : | : |
| : eau à 50°C | : | : | : | : | : | : | : | : | : |
| : MOR (MPa) | : 29,1 | : 30,7 | : 26,1 | : 25,8 | : 32,7 | : 32,5 | : 10,3 | : 19,6 | : |
| : $\varepsilon$ (%) | : 0,8 | : 0,85 | : | : | : 1,02 | : 0,94 | : | : | : |
| : 28 j + 56 j | : | : | : | : | : | : | : | : | : |
| : eau à 50°C | : | : | : | : | : | : | : | : | : |
| : MOR (MPa) | : 25,2 | : 30,2 | : 21 | : 21,8 | : 31,9 | : 33,6 | : 10,5 | : 16,9 | : |
| : $\varepsilon$ (%) | : 0,6 | : − | : − | : − | : 0,96 | : 0,94 | : − | : − | : |
| : 28 j + 84 j | : | : | : | : | : | : | : | : | : |
| : eau à 50°C | : | : | : | : | : | : | : | : | : |
| : MOR (MPa) | : 24,1 | : 29,9 | : 19,3 | : 17,8 | : 27,8 | : 29,7 | : 10,5 | : 20,9 | : |
| : $\varepsilon$ (%) | : 0,4 | : − | : − | : − | : 0,77 | : 0,68 | : − | : − | : |

EP 0 252 848 B1

## Revendications

1. Produit à base de ciment contenant des fibres de verre résistantes aux alcalins, caractérisé en ce que sa matrice de ciment comprend, pour 100 parties en poids de ciment, d'environ 10 parties à environ 40 parties en poids de métakaolin, celui-ci présentant une réactivité à l'essai Chapelle modifié supérieure à 500 mg CaO par gramme de métakaolin.

2. Produit selon la revendication 1, caractérisé en ce que sa matrice comprend, pour 100 parties en poids de ciment, entre 15 parties et 35 parties en poids de métakaolin et, avantageusement, environ 30 parties.

3. Produit selon la revendication 1, caractérisé en ce que la matrice comprend, pour 100 parties en poids de ciment, entre 20 parties et 30 parties en poids de métakaolin et, avantageusement, environ 22,5 parties.

4. Produit selon l'une quelconque des revendications précédentes, caractérisé en ce que le verre alcali-résistant comprend un pourcentage en poids de $ZrO_2$ compris entre 14 % et 20 %, par exemple 16 %.

5. Produit selon l'une quelconque des revendications précédentes, caractérisé en ce que le verre alcali-résistant comprend un pourcentage en poids de $ZrO_2$ compris entre 15,5 % et 16,5 %.

6. Produit selon l'une quelconque des revendications précédentes, caractérisé en ce que le métakaolin, en pourcentage en poids comprend :

| | |
|---|---|
| $SiO_2$ | 50 % à 60 % |
| $Al_2O_3$ | 38 % à 46 % |
| CaO | < 1 % |
| $Na_2O$ | < 1 % |
| $_2O$ | < 1 % |
| $Fe_2O_3$ | 1 % à 2 % |
| MgO | 0,1 % à 0,2 % |

la somme des différents pourcentages étant inférieure à 100 %.

7. Produit selon la revendication 6, caractérisé en ce que le métakaolin pur, en pourcentage en poids comprend :

| | |
|---|---|
| $SiO_2$ | 56 % à 59 % |
| $Al_2O_3$ | 38 % à 41 % |
| CaO | < 0,1 % |
| $Fe_2O_3$ | 1,6 % à 2 % |

la somme des différents pourcentages étant inférieure à 100 %.

8. Produit selon la revendication 1, caractérisé en ce que le produit comprend du métakaolin et de la fumée de silice dans des proportions pour 100 parties de ciment en poids :

- métakaolin : 10 parties à 30 parties en poids,
- fumée de silice : 5 parties à 15 parties en poids

et plus particulièrement :

- métakaolin : 15 parties et
- fumée de silice : 10 parties.

9. Produit selon l'une quelconque des revendications précédentes, caractérisé en ce qu'on ajoute de l'ordre de 4 % à 10 % de polymère à la matrice afin de favoriser le mûrissement.

10. Produit selon la revendication 9, caractérisé en ce que le polymère utilisé est du type latex acrylique, ou styrène-butadiène.

## Claims

1. Cement-based product containing alkali-resistant glass fibres, characterised in that its cement matrix comprises approximately 10 to approcimately 40 parts by weight of metakaolin per 100 parts by weight of cement, the metakaolin having a reactivity in the modified Chapelle test greater than 500 mg CaO per gram of metakaolin.

2. Product according to Claim 1, characterised in that its matrix comprises between 15 parts and 35 parts by weight of metakaolin and advantageously approximately 30 parts per 100 parts by weight of cement.

3. Product according to Claim 1, characterised in that the matrix comprises between 20 parts and 30 parts by weight of metakaolin and advantageously approximately 22.5 parts per 100 parts by weight of cement.

4. Product according to any one of the preceding Claims, characterised in that the alkali-resistant glass comprises a weight percentage of $ZrO_2$ between 14% and 20%, for example 16%.

5. Product according to any one of the preceding Claims, characterised in that the alkali-resistant glass comprises a weight percentage of $ZrO_2$ between 15.5% and 16.5%.

6. Product according to any one of the preceding Claims, characterised in that the metakaolin comprises in weight percentage:

| | |
|---|---|
| $SiO_2$ | 50% to 60% |
| $Al_2O_3$ | 38% to 46% |
| CaO | < 1% |
| $Na_2O$ | < 1% |
| $K_2O$ | < 1% |
| $Fe_2O_3$ | 1% to 2% |
| MgO | 0.1% to 0.2% |

the sum of the different percentages being less than 100%.

7. Product according to Claim 6, characterised in that the pure metakaolin comprises in weight percentage:

| | |
|---|---|
| $SiO_2$ | 56% to 59% |
| $Al_2O_3$ | 38% to 41% |
| CaO | < 0.1% |
| $Fe_2O_3$ | 1.6% to 2% |

the sum of the different percentages being less than 100%.

8. Product according to Claim 1, characterised in that the product comprises metakaolin and silica dust in the following proportions per 100 parts by weight of cement:

— metakaolin: 10 parts to 30 parts by weight;
— silica dust: 5 parts to 15 parts by weight; and more particularly:
— metakaolin: 15 parts and
— silica dust: 10 parts.

9. Product according to any one of the preceding Claims, characterised in that a polymer is added to the matrix in the order of 4% to 10% in order to promote ripening.

10. Product according to Claim 9, characterised in that the polymer used is of the acrylic latex or styrene butadiene type.

## Patentansprüche

1. Produkt auf Zementbasis, das alkalibeständige Glasfasern enthält, dadurch gekennzeichnet, daß seine Zementmatrix auf 100 Gewichtsteile Zement etwa 10 bis etwa 40 Gewichtsteile Metakaolin umfaßt, das im modifizierten Chapelle-Test (essai Chapelle) eine Reaktivität von mehr als 500 mg CaO pro Gramm Metakaolin aufweist.

2. Produkt nach Anspruch 1, dadurch gekennzeichnet, daß seine Matrix auf 100 Gewichtsteile Zement 15 bis 35 Gewichtsteile Metakaolin und vorteilhaft etwa 30 Teile enthält.

3. Produkt nach Anspruch 1, dadurch gekennzeichnet, daß seine Matrix auf 100 Gewichtsteile Zement 20 bis 30 Gewichtsteile Metakaolin und vorteilhaft etwa 22,5 Teile enthält.

4. Produkt nach einem der vorstehenden Ansprüche, dadurch gekennzeichnet, daß das alkalibeständige Glas einen Gew.-%-Anteil $ZrO_2$ zwischen 14% und 20%, beispielsweise 16%, enthält.

5. Produkt nach einem der vorstehenden Ansprüche, dadurch gekennzeichnet, daß das alkalibeständige Glas einen Gew.-%-Anteil $ZrO_2$ zwischen 15,5% und 16,5% enthält.

6. Produkt nach einem der vorstehenden Ansprüche, dadurch gekennzeichnet, daß das Metakaolin, in Gew.-%, umfaßt:

| | |
|---|---|
| $SiO_2$ | 50% bis 60% |
| $Al_2O_3$ | 38% bis 46% |
| CaO | < 1% |
| $Na_2O$ | < 1% |
| $K_2O$ | < 1% |
| $Fe_2O_3$ | 1% bis 2% |
| MgO | 0,1% bis 0,2% |

wobei die Summe der verschiedenen Prozentangaben kleiner als 100% ist.

7. Produkt nach Anspruch 1, dadurch gekennzeichnet, daß das reine Metakaolin, in Gew.-%, umfaßt:

| | |
|---|---|
| $SiO_2$ | 56% bis 59% |
| $Al_2O_3$ | 38% bis 41% |
| CaO | < 0,1% |
| $Fe_2O_3$ | 1,6% bis 2% |

wobei die Summe der verschiedenen Prozentangaben kleiner als 100% ist.

8. Produkt nach Anspruch 1, dadurch gekennzeichnet, daß das Produkt auf 100 Gewichtsteile Zement Metakaolin und pyrogene Kieselsäure in den Anteilen umfaßt:

– Metakaolin: 10 Teile bis 30 Gewichtsteile,
– pyrogene Kieselsäure: 5 Teile bis 15 Gewichtsteile

und insbesondere:

– Metakaolin: 15 Teile und
– pyrogene Kieselsäure: 10 Teile.

9. Produkt nach einem der vorstehenden Ansprüche, dadurch gekennzeichnet, daß man der Matrix Polymer in der Größenordnung von 4 bis 10% zur Unterstützung der Reifung zusetzt.

10. Produkt nach Anspruch 9, dadurch gekennzeichnet, daß das verwandte Polymer vom Acryllatex- oder Styrol-Butadiene-Typ ist.